# EUROPÄISCHE PATENTANMELDUNG

(11) **EP 2 043 202 A1**
(43) Veröffentlichungstag der Anmeldung: **01.04.2009**
(21) Anmeldenummer: 08163162.4
(22) Anmeldetag: 28.08.2008
(51) Int. Cl.: H01R 13/622

(54) **Elektrische oder optische Steckverbindung**

(30) Priorität: 28.09.2007 DE 202007013637 U
(71) Anmelder: Weidmüller Interface GmbH & Co. KG, 32758 Detmold (DE)
(72) Erfinder: Nickol, Marcell, 99831, Creuzburg / Scherbda (DE)
(74) Vertreter: Dantz, Jan Henning

(57) **Zusammenfassung**

Elektrische oder optische Steckverbindung (1) mit einem Steckerteil (2) mit einem Innenkörper 12 mit ersten elektrisch leitenden oder lichtleitenden Kontakten, wobei der Innenkörper (12) von einer ein Außengewinde (6) aufweisen Hülse (5) umgeben ist; einem Buchsenteil (3) mit einem mit dem Innenkörper (12) des Steckerteils zusammensteckbaren Innenkörper (4) mit zu den ersten Kontakten korrespondierenden zweiten elektrisch leitenden oder lichtleitenden Kontakten; wobei der Innenkörper (12) von einer ein Innengewinde (8) aufweisen Hülse (7) umgeben ist, wobei dass Innengewinde (8) und das Außengewinde (6) dazu ausgelegt sind, ineinander zu greifen, wobei die Hülsen (5, 7) des Steckerteils und des Buchsenteils (3) in wenigstens zwei oder mehr umfangsverteilte Ringsegmente (17a, b, c, ...; 18a, b, c, ...) unterteilt sind, die an ihrem freien Ende radial auslenkbar sind.

## Beschreibung

Gegenstand der vorliegenden Erfindung ist eine elektrische oder optische Steckverbindung nach dem Oberbegriff des Anspruchs 1.

Elektrische Steckverbindungen der gattungsgemäßen Art - insbesondere im so genannten M-Standard (z.B. "M12") sind in vielfacher Ausführungsform bekannt.

Im einfachsten Falle sind die Steckerteile mit einer ein Gewinde aufweisenden drehbaren Hülse ausgestattet. Derartige Konstruktionen machen es erforderlich, nach dem Zusammenführen der Steckkontakte eine Verschraubung über die gesamte Gewindelänge herbeizuführen. Insbesondere bei der Herstellung einer Vielzahl von derartigen Steckverbindungen bedeutet dies einen nicht unbeträchtlichen Zeitaufwand. An Verteilern der Automatisierungstechnik sind die Anschlüsse dazu oftmals relativ dicht beieinander angeordnet, was den Zeitaufwand ebenfalls erhöht und das Anschließen relativ mühsam macht.

Es sind deshalb auch Steckerteile -und entsprechende Gegenstücke- von Steckverbindungen geschaffen worden, die das Einführen der steckerteilseitigen Hülse in das Gegenstück durch einfaches Einschieben ermöglichen und zum Schluss des Montagevorganges durch eine geringfügige Drehung eine endgültige und axiale Sicherung zwischen den beiden Bauteilen gestatten. Dabei ist als nachteilig anzusehen, dass die bisherigen Konstruktionen eine aufwendige Fertigung und Bearbeitung sowohl der Hülse des Steckerteiles wie auch eine Bearbeitung des Gegenstückes erforderlich machen insofern, als die bislang bekannten Konstruktionen darauf basieren, dass entweder bajonettartige Verbindungsmöglichkeiten beinhalten oder das sowohl die Hülse des Steckerteiles wie auch das Gegenstück mit in Achsrichtung verlaufenden, gewindefreien Bereichen versehen sind, die ein axiales Zusammenführen oder Zusammenstecken ohne Notwendigkeit einer Drehung ermöglichen und erst im letzten Moment durch Verdrehen eine axiale Sicherung gestatten. Wird bei letzterer Variante ein Anschluss an ein Innengewinde realisiert, dass nicht mit den achsfreien Bereichen versehen ist, kann zudem kein Zeitvorteil gegenüber bekannten Verschraubungen erzielt werden.

Es ist auch bekannt, die ein Innengewinde aufweisende Hülse des Buchsenteils in Ringsegmente zu unterteilen, die nach dem Einstecken des Steckerteils nach innen geklappt und dann verriegelt werden. Nur wenn die Hülse derart ausgelegt ist, ergibt sich allerdings ein Vorteil in der Handhabung.

Aus der gattungsgemäßen DE 20 2006 003 400 ist eine elektrische Steckverbindung mit einem Steckerteil mit einer Hülse zur Verbindung mit einem ein Innengewinde aufweisenden Gegenstück bekannt, wobei die Hülse an ihrem in das Gegenstück eingreifenden Außenumfangsbereich mit mindestens einem auslenkbaren, vorzugsweise federnd auslenkbaren und nach Art eines Teiles eines Außengewindeganges ausgebildeten Vorsprungs ausgestattet ist.

Alternativ ist es denkbar, dass das Gegenstück in seinem die Hülse aufnehmenden Innenumfangsbereich mit mindestens einem auslenkbaren, vorzugsweise federnd auslenkbaren und nach Art eines Teiles eines Innengewindeganges bildenden Vorsprungs ausgestattet ist. Die Hülse ist dabei mit einem Außengewinde zur Verbindung mit dem Gegenstück versehen.

Diese Steckverbindung hat sich an sich bewährt. Es besteht aber der Bedarf nach einem weiteren Schnellverbindungssystem, die insbesondere stets auch auf einfache Weise auch mit Steckerteilen oder Buchsenteilen kuppelbar sind, die nicht mit Einrichtungen zum Schnellanschluss ausgelegt sind.

Diese Aufgabe löst die Erfindung durch den Gegenstand des Anspruchs 1.

Sie schafft eine elektrische oder optische Steckverbindung mit einem Steckerteil mit einem Innenkörper mit ersten elektrisch leitenden oder lichtleitenden Kontakten, wobei der Innenkörper von einer ein Außengewinde aufweisen Hülse umgeben ist und mit einem Buchsenteil mit einem mit dem Innenkörper des Steckerteils zusammensteckbaren Innenkörper mit zu den ersten Kontakten korrespondierenden zweiten elektrisch leitenden oder lichtleitenden Kontakten. Dabei ist der Innenkörper von einer ein Innengewinde aufweisen Hülse umgeben und dass Innengewinde und das Außengewinde sind dazu ausgelegt, ineinander zu greifen und sowohl die Hülse des Steckerteils als auch die des Buchsenteils sind in wenigstens zwei oder mehr umfangsverteilte Ringsegmente unterteilt, die an ihren freien Ende vorzugsweise elastisch radial auslenkbar sind.

Dadurch, dass beide Steckverbinderteile jeweils mit den vorzugsweise radial federnde Ringsegmente aufweisenden Hülsen versehen sind, wird eine besonders einfach handhabbare und betätigbare Steckverbindung realisiert, die stets auch kompatibel zu den Stecker- und Buchsenteilen insbesondere des M-Standards ohne eine derartige Unterteilung der Gewinde aufweisenden Hülsen in Ringsegmente sind. Zudem ist auch eine Kompatibilität zu relativ vielen bekannten "Schnellanschluss-Systemen" gegeben, die bisher für den "M-Standard" entwickelt wurden'.

Vorzugsweise sind die Hülsen des Steckerteils und des Buchsenteils axial relativ zu den jeweiligen Innenkörpern verschieblich und verdrehbar.

Dabei ist es zweckmäßig, wenn der Innenkörper des Steckerteils an seinem zum freien Ende des Steckerteils weisen Ende einen sich erweiternden Abschnitt und der der äußere Kragen des Buchsenteils an seinem zum freien Ende des Buchsenteils weisenden Ende einen sich verjüngenden Abschnitt aufweist, die dazu ausgelegt sind, dass die Ringsegmente beim axialen Verschieben auf sie auflaufen, so dass die Ringsegmente des Steckerteils nach außen und die Ringsegmente des Buchsenteils nach innen gespreizt werden, so dass ineinander greifen, wobei sich die Ringsegmente des Buchsenteils an dem äußeren Kragen abstützen.

Als besonderer Vorteil ist zu betonen, dass die volle Kompatibilität mit Stecker- und Buchsenteilen bekannter Auslegung gewahrt bleibt, d.h. das Steckerteil und auch das Buchsenteils sind auch mit herkömmlichen Steckerteilen und Buchsenteilen des von den Abmessungen her korrespondierenden M-Standards (z.B. M8 oder M12) kompatibel. Auch hier ist eine Schnellverbindung ohne Schrauben realisierbar, in dem die Hülse zunächst zurückgeschoben wird und dann die Innenkörper ineinander gesteckt werden, woraufhin durch axiales Bewegen der Hülse eine Verriegelung der Hülsen durch Auflaufen auf den sich erweiternden oder verjüngenden Abschnitt erfolgt. Abschließend werden die Hülsen leicht verdreht.

Die Erfindung betrifft auch ein Steckerteil oder ein Buchsenteil einer Steckverbindung nach einem der Ansprüche 1 bis 12.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben. Es zeigen:
- Figur 1a: eine schematische Darstellung einer Steckverbindung mit einem erfindungsgemäßen Steckerteil und einem Buchsenteil im nicht zusammengesteckten Zustand;
- Figur 1b: einen vergrößerten Ausschnitt A aus Fig. 1a;
- Figur 1c: eine perspektivische Ansicht der Anordnung aus Fig. 1a;
- Figur 2a-c: zu Fig. 1a-c analoge Darstellungen während des Zusammensteckens.

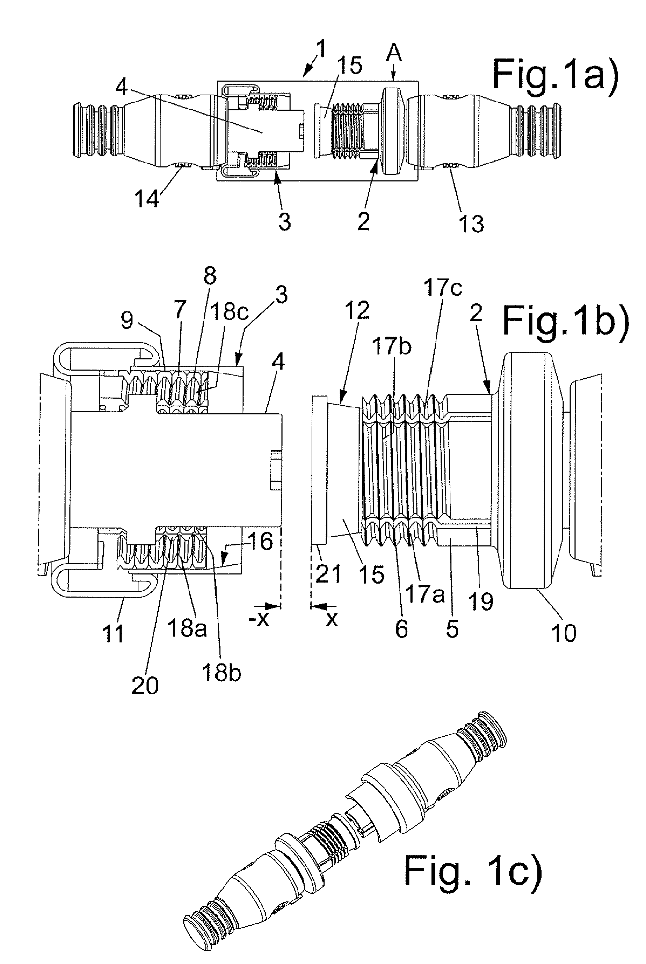

In den Figuren 1 bis 3 ist mit dem Bezugszeichen 1 insgesamt eine Steckverbindung bezeichnet, welche ein Steckerteil 2 und ein hiermit axial zusammensteckbares Gegenstück 3 (ein Buchsenteil) umfasst, die in bekannter Weise mit korrespondierenden ersten und zweiten Kontakten ausgestattet sind, die z.B. als Stifte und korrespondierende Buchsen ausgebildet sind (hier nicht dargestellt).

Das Steckerteil 2 weist einen vorzugsweise aus einem Isolierstoff bestehenden zylindrischen Innenkörper 12 mit den ersten Kontakten auf (hier nicht zu erkennen) und das Buchsenteil bzw. Gegenstück 3 ebenfalls einen aus einem Isolierstoff bestehenden Innenkörper 4 mit den zweiten Kontakten, wobei hier der Innenkörper 4 des Buchsenteils 3 in seinem axialen Endbereich in den Innenkörper 12 des Steckerteils 2 einsteckbar ist.

Das Steckerteil 2 ist mit einer relativ zum Innenkörper 12 beweglichen - axial verschieblichen und verdrehbaren - Hülse 5 ausgestattet, die jedenfalls abschnittsweise ein Außengewinde 6 aufweist und dazu dient, eine Verbindung zwischen dem Steckerteil 2 und dem Buchsenteil 3 herzustellen.

Zu diesem Zweck ist das Buchsenteil 3 im Bereich einer relativ zum Innenkörper 12 beweglichen - axial verschieblichen und verdrehbaren - Hülse 7 mit einem Innengewinde 8 versehen (siehe Figur 3) und die Hülse 4 des Steckerteiles 2 ist dazu ausgelegt, mit ihrem Außengewinde 6 in dieses Innengewinde 8 einzugreifen.

Um die Außenhülse herum liegt konzentrisch ein Kragen 9. Betätigungsabschnitte 10, 11 ermöglichen das Greifen der Hülsen 5 bzw. 7.

Griffabschnitte 13, 14 dienen zum Halten des Stecker- und des Buchsenteils 2, 3. Das Steckerteil und das Buchsenteil 2, 3 können aber auch fest an einem Gehäuse eines Gerätes, beispielsweise eines Verteilers, angeordnet sein (hier nicht dargestellt).

Die Hülsen 5 und 7 des Steckerteils 2 und des Buchsenteils 3 sind jeweils axial in Steckrichtung +X bzw. -X relativ zu den Innenkörpern 4, 12 verschieblich.

Der Innenkörper 12 des Steckerteils 2 weist an seinem zum Steckgesicht weisenden freien Ende am Außenumfang einen sich - vorzugsweise konisch - erweiternden Abschnitt 15 auf, der hier in einem als äußerer Anschlag fungierenden Ringbund 21 endet. Der äußere Kragen 9 des Buchsenteils 3 weist dagegen an seinem zum Steckgesicht weisenden freien Ende einen sich - vorzugsweise konisch - verjüngenden Abschnitt 16 auf.

Die Hülsen 5 und 7 sind jeweils in zwei oder mehr Ringsegmente 17a, b, ... bzw. 18a, b, c, ... unterteilt, die durch in Steckrichtung verlaufenden Spalte 19, 20 voneinander getrennt sind.

Die Ringsegmente 17 bzw. 18 sind jeweils derart ausgelegt, dass sie ohne äußere Krafteinwirkung ihre jeweilige Stellung im Raum beibehalten, dass sie aber elastisch federnd durch Krafteinwirkung radial nach innen federnd beweglich sind.

Diese Krafteinwirkung kann hier durch Auflaufen auf die sich verjüngenden bzw. den sich erweiternden Abschnitte 15, 16 realisiert werden.

Die Begriffe des Steckerteils und des Buchsenteils 2, 3 sind nicht einschränkend zu verstehen und leiten sich hier aus der Lage der Hülsen als innere Hülse 5 (Steckerteil) und äußere Hülse 7 (Buchsenteil) relativ zueinander ab.

Die Funktion dieser Anordnung ist wie folgt.

Zum Zusammenstecken des Steckerteils 2 und des Buchsenteils 3 werden zunächst - wenn diese Position nicht bereits werksseitig voreingestellt gegeben ist - die Hülsen 4, 12 an den Betätigungsabschnitten 10, 11 gegen die Richtung des Zusammensteckens des Steckerteils 2 und des Buchsenteils 3 zurückgezogen, so dass sie in axialer Richtung jeweils hinter den Abschnitten 15 bzw. 16 liegen. Sodann bzw. in dieser Position werden die Innenkörper 4, 12 ineinander gesteckt und die elektrischen Kontakte in diesen Innenkörpern (typischerweise Stift- und Buchsenkontakte) geschlossen.

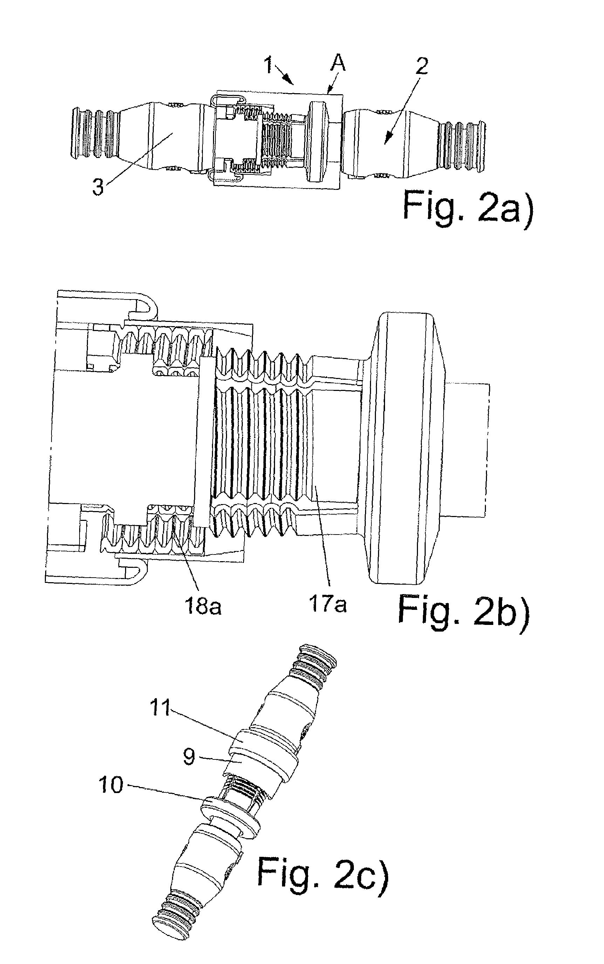

Sodann werden die Betätigungsabschnitte 10 und 11 gegriffen und es wird zunächst die Hülse 5 und dann die Hülse 7 in Steckrichtung x bzw. - x verschoben. Dabei laufen die Ringsegmente 17, 18 jeweils so weit möglich auf den sich erweiternden bzw. sich verjüngenden Abschnitt 15, 16 auf, so dass zunächst die Ringsegmente der Hülse 5 des Steckerteils zum freien Ende hin nach außen gespreizt werden und dann die Ringsegmente 18 der Hülse 7 des Buchsenteils 3 nach innen gedrückt werden, wobei die Gewindegänge der Gewinde 6, 8 ineinander gepresst werden (siehe hierzu Fig. 2). Abschließend werden die Hülsen leicht (z.B. um eine viertel oder halbe Drehung) verdreht, um die Verbindung zu sichern. Die Gewinde 6, 8 sind damit ebenfalls in Gewindeabschnitte unterteilt, die zu Normgewinden kompatibel sein können. Es ist denkbar, die Hülsen 5, 7 aus einem Stück zu fertigen, wenn die Ringsegmente 17, 18 jeweils in einem vom freien Ende ab liegenden Bereich (z.B. im Bereich der hier ringartigen Betätigungsabschnitte 10, 11) einstückig miteinander verbunden sind.

Die Gewinde 6, 8 befinden sich am Ende dieser Bewegung voll miteinander im formschlüssigen Eingriff. Die Auslegung ist selbsthemmend derart gewählt, dass sich die Hülsen nicht ohne äußere Krafteinwirkung voneinander lösen können. Alternativ kann ein optionales Verriegelungselement vorgesehen sein (hier nicht dargestellt).

Das Lösen erfolgt durch leichtes Verdrehen der Hülsen und ein anschließendes axiales Zurückbewegen der Hülsen zum Lösen der Gewindegänge der Gewinde 6, 8 voneinander und durch ein drauffolgendes axiales Auseinanderziehen der Innenkörper 4, 12 gegen die Steckrichtung.

### Bezugszeichenliste

- Steckverbindung: 1
- Steckerteil: 2
- Buchsenteil: 3
- Innenkörper: 4
- Hülse: 5
- Außengewinde: 6
- Hülse: 7
- Innengewinde: 8
- Kragen: 9
- Betätigungsabschnitte: 10, 11
- Innenkörper: 12
- Griffabschnitte: 13, 14
- sich erweiternder Abschnitt: 15
- sich verjüngender Abschnitt: 16
- Segmente: 17a, b,...; 18a, b, c, ...
- Spalte: 19, 20
- Ringbund: 21

## Patentansprüche

1. Elektrische oder optische Steckverbindung (1) mit:
a. einem Steckerteil (2) mit einem Innenkörper 12 mit ersten elektrisch leitenden oder lichtleitenden Kontakten, wobei der Innenkörper (12) von einer ein Außengewinde (6) aufweisen Hülse (5) umgeben ist;
b. einem Buchsenteil (3) mit einem mit dem Innenkörper (12) des Steckerteils zusammensteckbaren Innenkörper (4) mit zu den ersten Kontakten korrespondierenden zweiten elektrisch leitenden oder lichtleitenden Kontakten; wobei der Innenkörper (12) von einer ein Innengewinde (8) aufweisen Hülse (7) umgeben ist, wobei dass Innengewinde (8) und das Außengewinde (6) dazu ausgelegt sind, ineinander zu greifen,
**dadurch gekennzeichnet, dass**
c. die Hülsen (5, 7) des Steckerteils und des Buchsenteils (3) in wenigstens zwei oder mehr umfangsverteilte Ringsegmente (17a, b, c,...; 18a, b, c, ...) unterteilt sind, die an ihrem freien Ende radial auslenkbar sind.

2. Steckverbindung nach Anspruch 1, **dadurch gekennzeichnet, dass** die Ringsegmente (17a, b, c, ...; 18a, b, c, ...) elastisch radial auslenkbar sind.

3. Steckverbindung nach Anspruch 1 oder 2, **dadurch gekennzeichnet, dass** die Hülse (5) des Steckerteils (2) relativ zu dessen Innenkörper (12) axial beweglich ist.

4. Steckverbindung nach Anspruch 3, **dadurch gekennzeichnet, dass** der Innenkörper (12) des Steckerteils (2) an seinem zum freien Ende des Steckerteils weisen Ende einen sich erweiternden Abschnitt (15) aufweist.

5. Steckverbindung nach Anspruch 4, **dadurch gekennzeichnet, dass** sich der Abschnitt (15) konisch erweitert,

6. Steckverbindung nach Anspruch 5, **dadurch gekennzeichnet, dass** der Abschnitt (15) in einem als äußerer Anschlag für die Hülse (5) fungierenden Ringbund (21) endet.

7. Steckverbindung nach einem der vorstehenden Ansprüche, **dadurch gekennzeichnet, dass** die Hülse (5) des Steckerteils (2) relativ zu dessen Innenkörper (12) verdrehbar ist.

8. Steckverbindung nach einem der vorstehenden Ansprüche, **dadurch gekennzeichnet, dass** die die Hülse (7) des Buchsenteils (3) relativ zu dessen Innenkörper (4) axial beweglich ist.

9. Steckverbindung nach einem der vorstehenden Ansprüche, **dadurch gekennzeichnet, dass** der äußere Kragen (9) des Buchsenteils (3) an seinem zum freien Ende des Buchsenteils weisenden Ende einen sich verjüngenden Abschnitt (16) aufweist.

10. Steckverbindung nach Anspruch 9, **dadurch gekennzeichnet, dass** sich der Abschnitt (16) konisch verjüngt.

11. Steckverbindung nach einem der vorstehenden Ansprüche, **dadurch gekennzeichnet, dass** die die Hülse (7) des Buchsenteils (3) relativ zu dessen Innenkörper (4) verdrehbar ist.

12. Steckverbindung nach einem der vorstehenden Ansprüche, **dadurch gekennzeichnet, dass** die Hülse (5, 7) Betätigungsabschnitte (10, 11) aufweisen.

13. Steckverbindung nach einem der vorstehenden Ansprüche, **dadurch gekennzeichnet, dass** die Hülsen (5, 7) einstückig ausgelegt sind.

14. Steckerteil (2) einer Steckverbindung nach einem der vorstehenden Ansprüche.

15. Buchsenteil (3) einer Steckverbindung nach einem der vorstehenden Ansprüche.
